# EUROPEAN PATENT APPLICATION

(11) **EP 1 638 262 A1**
(43) Date of publication of application: **22.03.2006**
(21) Application number: 04022438.8
(22) Date of filing: 21.09.2004
(51) Int. Cl.: H04L 12/56

(54) **Quality of service provisioning across multiple networks**

(71) Applicant: SIEMENS AKTIENGESELLSCHAFT, 80333 München (DE)
(72) Inventor: Engel, Thomas, 85579 Unterbiberg (DE); Floroiu, John W., Dr., 10589 Berlin (DE); Lichtwald, Götz, 77839 Lichtenau/Ulm (DE); Schrodi, Karl, 82538 Geretsried (DE); Schwabe, Thomas, 81827 München (DE); Sislaem, Dorgham, 10625 Berlin (DE); Toedtmann, Birger, 47119 Duisburg (DE)

(57) **Abstract**

We propose a method and an apparatus for coordinating QoS (Quality of Service) provisioning across multiple communication networks. According to the invention the QoS provided by a first and second network is coordinated via a two-side mapping of QoS parameters. In order to be able to perform such a mapping a set of QoS indicators for denoting mutually recognized QoS classes is agreed upon first. The mapping is performed accordingly so that traffic transmitted from the first to the second network receives the same QoS in each of the networks. By coordinating the QoS of individual networks along a path an end-to-end QoS provisioning may be provided.

## Description

The invention relates to a method for coordinating QoS provisioning by a first and a second communication network and an apparatus having means adapted for carrying out such a method.

Traditionally, packet networks, such as IP (Internet Protocol) networks, are deployed for data services. As a rule, this kind of services does not require to do better than providing a "best effort" service, i.e. no quality of service (QoS) levels have to be guaranteed.

Recent developments aim at a more general employment of packet network. It is envisaged to implement real time transmission services. To this purpose one needs to enhance packet networks in a way so that QoS is conserved.

Future enhanced packet networks are intended to support applications that include transmissions of voice, video and data streams. Such services require timely delivery of data packets. Low latency, small delay jitter as well as very low packet loss rates are required. For that purpose, future enhanced packet networks, called Next Generation Networks (NGNs) below, will implement a number of advanced service classes in addition to the traditional best effort service. These advanced service classes will guarantee that data packets are delivered to their destinations without exceeding certain delay, jitter and loss limits to a very high probability. Guarantees or limits will be specific to individual kinds of traffic or classes of service. The implementation of the above service classes is likely to be based on the DiffServ model defined by the IETF (Internet Engineering Task Force) in [RFC2474] and [RFC2475].

While there are clear concepts on how to use the DiffServ model within a NGN, i.e. a single network (which is also commonly referred to as an administrative domain or autonomous system (AS)), it is still an open issue how NGNs will co-operate to provide end-to-end QoS across multiple networks.

The basic DiffServ model defined in [RFC2474] and [RFC2475] is complemented by literature about bandwidth brokers, inter-domain control plane architectures and signalling protocols like BGRP (Border Gateway Reservation Protocol), SICAP (Shared-Segment Inter-domain Control Aggregation Protocol), SIBBS (Simple Inter-Domain Bandwidth Broker Specification), and protocols which emerge from NSIS (New Steps in Signalling), an IETF working group.

In addition, there are proposals how to formally describe flows and QoS requirements in an SLS (service level specification) as part of SLAs (service level agreements) in order to dynamically negotiate QoS provisioning between networks (see Goderis, D., et al., "Service Level Specification Semantics, Parameters and negotiation requirements", draft-tequila-sls-00.txt, http://www.ist-tequila.org/sls/, July 2000, and Rajan, R., et al., "Service Level Specification for Inter-domain QoS Negotiation", draft-somefolks-sls-00.txt, http://www.ist-tequila.org/sls/, November 2000).

Some proposals assume standardised inter-domain services often called globally well-known services, e.g. Teitelbaum, B., "QBone Bandwidth Broker Architecture", Work in Progress, http://qbone.internet2.edu/bb/bboutline2.html, 2000.

According to these models, the provisioning of end-to-end QoS across multiple NGNs is based on NGN specific service classes, SLAs between neighbouring NGNs, and an inter-domain signalling protocol used to control the resources required for end-to-end QoS provisioning and the access to them (admission control).

In order to get end-to-end QoS across multiple NGNs, a user or application has to successfully pass admission control for each flow. For that purpose, in an initial step a resource reservation request is issued by the end system (hosting the user and his applications). It specifies the characteristics of the traffic that is to be transmitted and the required end-to-end QoS. Usually, this request is transmitted by means of a signalling protocol across multiple NGNs (i.e. along a route) to a destination. Each NGN along the route has to decide whether it can support the requested QoS. Resources for the requested transmission service are then reserved. A flow is only admitted if all NGNs involved comply with the request. In that case, the ingress border router of each NGN will open a gate for the flow, i.e. set up a classifier, a marker, and a policer accordingly. Upon admission the end system transmits the flow with the requested QoS on the condition that the announced traffic profile is not exceeded.

As long as the standardisation process on generally or globally applying service classes has not come to a close the deployment of above concept for end-to-end QoS transmission is hampered by the absence of service classes that are generally accepted and supported across multiple networks.

The aim of the present invention is to provide for QoS provisioning across multiple networks pending further standardisation work on service classes.

According to the present invention, two-side or bilateral mappings of QoS (Quality of Service) indicators between neighbouring networks are performed to allow for combining individual service classes to end-to-end services. A person skilled in the art will appreciate that the inventive concept may be extended to many-side or multilateral mappings without the need for globally accepted or standardised QoS indicators or service classes.

The invention employs QoS indicators or identifiers to specify the required treatment of QoS traffic by a network. The QoS provisioning is coordinated or linked my means of mapping of QoS indicators. This mapping may be performed via a service class table. In an initial stage, a set of QoS indicators is negotiated. This set of QoS indicators is locally defined in that sense that it is used or recognized by two or more adjacent networks, but as a rule not by all networks along an end-to-end route. These QoS indicators are associated with specific QoS requirements or service classes. The negotiation process may be carried out in the form of SLAs (service level agreements). Below the invention is set out with respect two adjacent or neighbouring networks, which are referred to as the first and the second network. First QoS indicators are fixed for QoS traffic to be transmitted from the first to the second network. Such QoS traffic is provided with a first QoS indicator. Upon transmission to the second network the first QoS indicator is mapped to a second QoS indicator and the QoS traffic is provided with the second QoS indicator, e.g. by replacing the first QoS indicators. The second QoS indicator ensures that QoS traffic is processed as such in the second network.

A QoS indicator may be given by a DSCP (differentiated service code point) value defined in the DiffServ concept. DSCP values are commonly inserted in a data packet header and thus can be extracted for interpretation and assignation of a service class. Usually, QoS indicators will correspond to service classes. The QoS indicator may also be used to identify the requisite traffic policing or traffic conditioning measures.

The present invention does not require standardised or globally defined services as a prerequisite for transmitting QoS traffic across multiple networks. In contrast, it allows designing, deploying and evolving inter-domain services in a flexible way. Modern networks, such as NGNs, may start with a set of service classes, add and delete service classes, as well as adopt the service classes supported by other networks, i.e. the invention is conductive to a gradual development of de facto standards by evolution and propagation of initial service classes. The flexibility is compounded by the fact that the individual networks may use additional service classes that are only defined within the network. Such service classes may be used for offering services to one's own customers only, i.e. for traffic that stays within the network.

To ensure that distinct traffic classes are not merged different first QoS indicators may be mapped to different second QoS indicators. That way the mapping is injective and the ordering of traffic classes may be kept transitive across an end-to-end route. With an injective mapping of QoS indicators the number of inter-domain service classes need not to be the same for each network, but different service classes are never mapped to the same service class. Traffic of different service classes is then not to be marked with the same QoS indicator. This way of mapping also insures that no service class will vanish. Service classes will be transitive along end-to-end routes: packets or traffic of different service classes will carry distinguishable QoS indicators everywhere, even in networks that implement a lower number of service classes.

QoS traffic with a first QoS indicator that cannot be mapped to a second QoS indicator, e.g. due to a smaller number of service classes supported by the second network, may be subjected to a standard treatment for non-QoS traffic or discarded.

According to an embodiment, transmission of QoS traffic from the first to the second network is preceded by requesting a resource reservation for transmission of QoS traffic. For a resource request according to a first service class the request is rejected by the second network if it is not able to support or recognize said first service class.

The mapping may be performed at an ingress point of the second network. This ingress point may be given by a router, a gateway or any other network element equipped with requisite mapping means, such as a service class table and software for changing QoS indicators of QoS traffic. Alternatively, the mapping may be performed at an egress point of the first network.

In the following an embodiment of the invention is described with reference to figures. The figures show
Fig. 1: a number of networks adapted for the inventive concept
Fig. 2: a flow chart illustrating an embodiment of the method according to the invention
Fig. 3: a flow chart for control measures within an employment scenario of the invention

Within the embodiment networks are given by IP (Internet Protocol) based NGNs (new generation networks), i.e. packet networks enhanced for real time services.

Each network is assumed to support a small, fixed number of service classes at its network boundary for end-to-end QoS (Quality of service) provisioning across networks. Below, these service classes are called inter-domain service classes (IDSCs). A network may use additional service classes to offer further services to their own customers only, i.e. for traffic that does not cross further NGNs. Neighbouring NGNs are assumed to use bilateral agreements, also called service level agreements (SLAs), to determine rules for mapping their IDSCs. These agreements are accompanied by bilaterally agreed DSCP (differentiated service code point) values which are used to mark or indicate the IP packets belonging to IDSCs. IP packets of an IDSC that are transmitted from a neighbouring NGN to an ingress border router of a subsequent network have to be marked with agreed DSCP values. Packets of different service classes are marked with different DSCP values, and packets not belonging to IDSCs must not use one of the DSCP values agreed for IDSCs. Packets of an IDSC that are forwarded via an egress border router to a next hop NGN are marked with agreed DSCP values in the same way. A network will use the same DSCP marking for all packets of an IDSC within its boundaries and will even not change these DSCP values at egress border routers. So, agreed DSCP values allow straightforward classification of incoming IP packets and are changed at ingress border routers only.

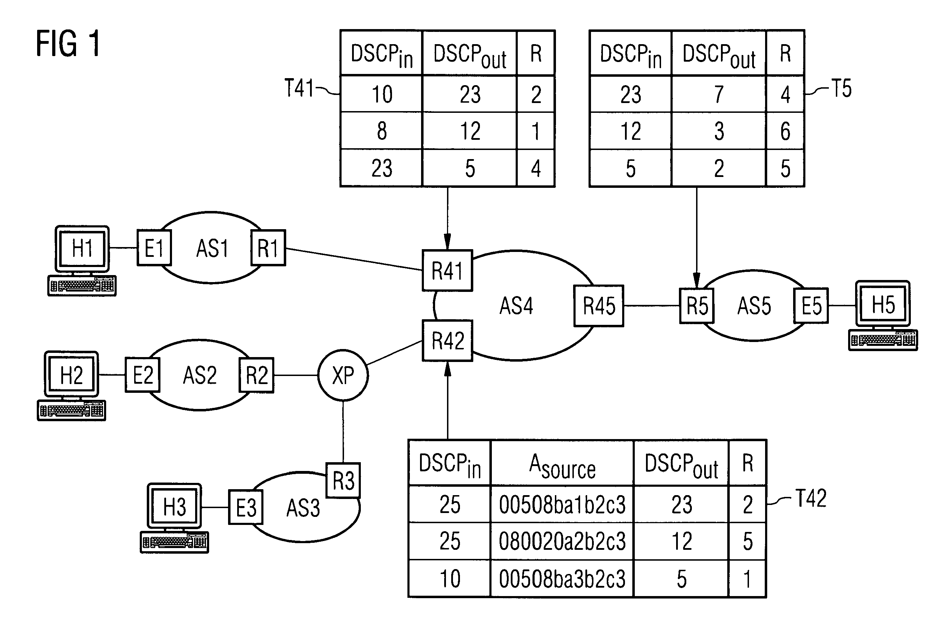

Figure 1 shows an example where five NGNs are interconnected by bilateral exchange points R1↔R41 and R45↔R5 and a multilateral exchange point XP, respectively. The tables T41, T42 and T5 show examples of SCTs (service class tables). The last column of the table provides the maximum bandwidth in Mbps for the respective traffic envelopes. In case of the multilateral exchange point, XP, the layer 2 source address is used to identify the source NGN as indicated in table T42. This way to proceed allows for independent usage of DSCP values. Packets that arrive via router R1 at border router R41 and that are marked with value 8 in the DSCP field are identified to belong to an IDSC. They will be re-marked with the value 12 in the DSCP field, and will pass the policer at R41 only if the data rates of all packets with DSCP value 8 from that neighbour do not exceed 1 Mbps. At the ingress border router R5 these packets are re-marked again with the DSCP value 3 as indicated in table T5.

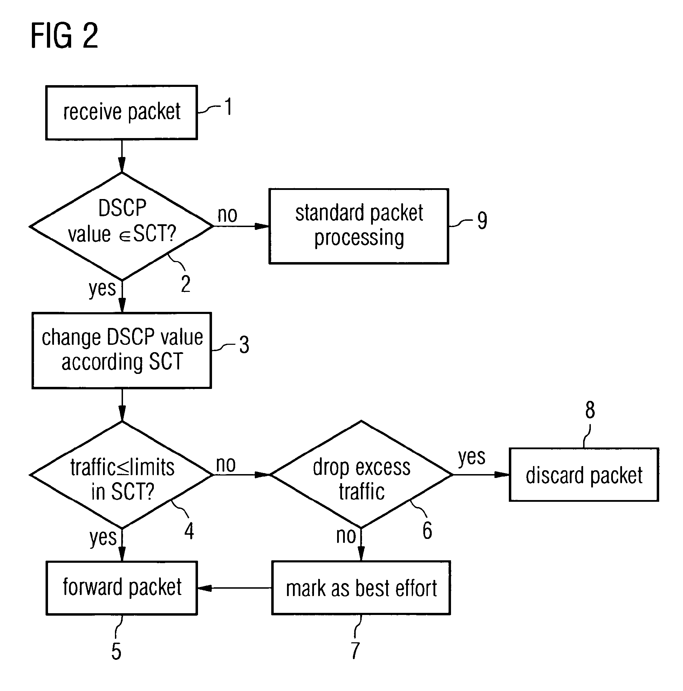

To realise inter-domain services in the way described above, each ingress border router uses a service class table (SCT). A SCT translates DSCP values of incoming packets into internally used DSCP values and includes agreed traffic envelopes (see figure 2). After a packet is received in step (1) the border router checks whether it belongs to an IDSC in step (2), i.e. whether it carries a DSCP value listed in its SCT.
If it does carry a listed DSCP value, the DSCP value of the packet is changed according to the SCT in step (3). Otherwise, standard packet processing is applied in step (9). In the step following the change of the DSCP value (4), a policer uses the traffic limits of the SCT to check whether the packet exceeds any traffic limit (e.g. maximum data rate or sustainable and peak rate provided by token buckets). Packets within the traffic limits are forwarded in step (5). Packets exceeding any limit are treated as agreed in step (7) or (8) by dropping or downgrading to best effort.

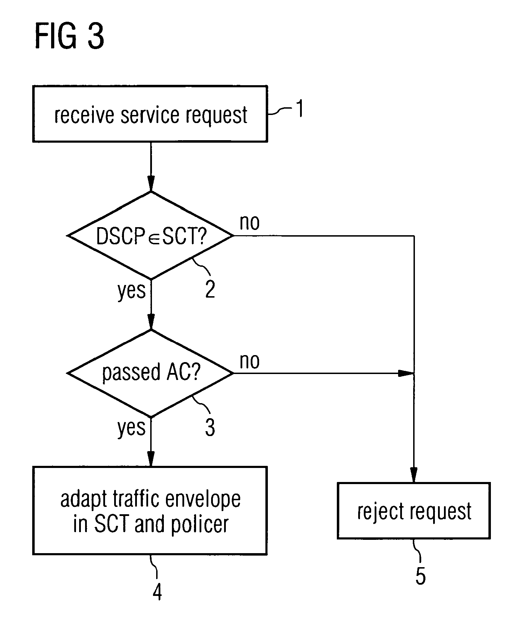

DSCP mapping and policing described by the SCT are configured statically. Only the traffic envelope used by the policer is adapted dynamically to the actual traffic volume changing with arrival and termination of flows as shown in figure 3. A network need not to implement a different per hop behaviour (PHB) for each of its IDSC offered at the network boundary. A network may feed the packets of two or more IDSCs into the same queue at each router and let them experience the same PHB within this network. But it is important to preserve the mapping of IP packets to IDSCs per neighbour. IP packets received from the same neighbouring NGN that belong to different IDSCs have to be mapped to distinguishable IDSCs again.

The number of IDSCs needs not to be the same for each network, but different IDSCs are never mapped to the same IDSC. IP packets of different service classes must not be marked with the same DSCP value. This insures that no service class will vanish. Service classes are transitive: packets of different service classes will carry distinguishable DSCP values everywhere, even in NGNs that implement a lower number of service classes.

If a network is not able to support a certain IDSC of its neighbour by mapping to one of its own IDSCs, it must reject corresponding resource requests in the control plane as shown in figure 3. When a service request is received (1), it is checked whether the requested service class is supported (2). To be processed a request also needs to pass an admission control (3) so that sufficiency of resources is ensured. When the service class is supported (1) and the admission control is passed (2) the maximum rate of the traffic envelope in the SCT and the policer are accordingly adjusted (4). Otherwise, the request is rejected (5).

In short, packets of a certain service class of a neighbouring NGN are either forwarded with a distinguishable DSCP value or the admission control (or policy control) will reject all corresponding service requests. This allows new service classes to be introduced partially and to be adopted by more NGNs in time or to die out again.

Traffic transmitted from access networks will be classified by the source address, source port, destination address, destination port, and protocol id fields as usually, i.e. need not to be pre-marked with DSCP values.

The SCT of an ingress router may be configured by network management or may be retrieved from an SLA database using the identifiers of the respective interface and the connected neighbouring router or network.

## Claims

1. A method for coordinating QoS (Quality of Service) provisioning by a first and a second communication network, including the steps of
- negotiating and fixing first QoS indicators for QoS traffic to be transmitted from the first network to the second network
- providing QoS traffic with a first QoS indicator taken from said first QoS indicators,
- transmitting the QoS traffic comprising the first QoS indicator from the first network to the second network,
- mapping the first QoS indicator to a second QoS indicator,
- providing the QoS traffic with the second QoS indicator, and
- providing for a QoS transmission across the second network in accordance with the second QoS indicator.

2. The method according to claim 1,
**characterized in that**
different first QoS indicators are mapped to different second QoS indicators.

3. The method according to one of the preceding claims,
**characterised in that**
the first QoS indicator refers to classes of service of the first network.

4. The method according to one of the preceding claims,
**characterised in that**
the second QoS indicator refers to classes of service of the second network.

5. The method according to one of the preceding claims,
**characterised in that**
the mapping is performed at an ingress point of the second network.

6. The method according to one of the preceding claims 1 to 4,
**characterised in that**
the mapping is performed at an egress point of the first network.

7. The method according to one of the preceding claims,
**characterised in that**
the second QoS indicator is provided to the QoS traffic by replacing the first QoS indicator with the second QoS indicator.

8. The method according to one of the preceding claims,
**characterised in that**
the QoS indicator is given by a DSCP (differentiated service code point) value.

9. The method according to one of the preceding claims,
**characterised in that**
the mapping is performed by means of a service class table.

10. The method according to one of the preceding claims,
**characterised in that**
the QoS traffic is subjected to a standard treatment for non-QoS traffic if there is no mapping defined for the first QoS indicator.

11. The method according to one of the preceding claims, further comprising the step of
policing said QoS traffic in accordance with the second QoS indicator.

12. The method according to one of the preceding claims,
**characterised in that**
- the transmission of said QoS traffic is preceded by a request for reservation of resources for a QoS transmission according to a first class of service, and
- the reservation of resources is rejected by the second network if it is not able to support said first class of service.

13. The method according to one of the preceding claims
**characterised in that**
the first network and the second network communicate via SLAs (service level agreements) to negotiate and fix mappings for classes of service.

14. An apparatus having means adapted for carrying out a method according to one of the claims 1 to 13.

15. The apparatus according to claim 14,
**characterised in that**
the means comprise mapping means for mapping a first QoS indicator referring to a first network to a second QoS indicator referring to a second network.

16. The apparatus according to claim 15,
**characterised in that**
the mapping means comprise a service class table.

17. The apparatus according to one of the claims 14 to 16,
**characterised in that**
the apparatus is given by an ingress router of the second network or an egress router of the first network.
